# EUROPÄISCHE PATENTSCHRIFT

(11) **EP 2 666 600 B1**
(45) Veröffentlichungstag und Bekanntmachung des Hinweises auf die Patenterteilung: **26.06.2019**
(21) Anmeldenummer: 13166792.5
(22) Anmeldetag: 07.05.2013
(51) Int. Cl.: B25J 17/02, B25J 19/00

(54) **Industrieroboter mit in einem Handgrundgehäuse sich erstreckenden Antrieben**
Industrial robot with drives that extend into a manual base housing
Robot industriel doté d'entraînements s'étendant dans un boîtier de base manuel

(30) Priorität: 21.05.2012 DE 102012208448
(43) Veröffentlichungstag der Anmeldung: 27.11.2013
(73) Patentinhaber: KUKA Deutschland GmbH, 86165 Augsburg (DE)
(72) Erfinder: Krumbacher, Rainer, 87675 Rettenbach (DE)
(74) Vertreter: Ege Lee & Partner Patentanwälte PartGmbB

(56) Entgegenhaltungen:
- EP-A1- 1 886 773
- EP-A1- 2 022 609
- WO-A1-01/74548
- DE-A1- 3 719 064

## Beschreibung

Die Erfindung betrifft einen Industrieroboter, aufweisend einen Roboterarm, der eine Schwinge und einen an der Schwinge schwenkbar gelagerten Armausleger aufweist, der ein schwenkbar an der Schwinge gelagertes Armgehäuse aufweist, der ein mittels eines ersten Antriebs, der eine erste Antriebswelle aufweist, um eine sich in Längserstreckung des Armauslegers erstreckende Armachse drehbar an dem Armgehäuse gelagertes Handgrundgehäuse aufweist, und der ein mittels eines zweiten Antriebs, der eine zweite Antriebswelle aufweist, um eine erste Handachse relativ zum Handgrundgehäuse verstellbares erstes Handglied und ein mittels eines dritten Antriebs, der eine dritte Antriebswelle aufweist, um eine zweite Handachse relativ zum ersten Handglied verstellbares zweites Handglied aufweist.

Solche Industrieroboter sind sowohl aus der US 2012/0103127 A1, als auch aus der EP 2 022 609 A1, bekannt.

Die US 2012/0103127 A1 offenbart einen Roboterarm mit einem hohlen Handgelenksgehäuse, einem Handgelenk, das drehbar an dem Handgelenksgehäuse gelagert ist, einem ersten Antrieb, einem ersten Übertragungsmechanismus, einem Drehelement, einem zweiten Antrieb, und einem zweiten Übertragungsmechanismus. Der erste Antrieb ist in dem Handgelenksgehäuse mit seiner Antriebswelle quer zur Längserstreckung des Armauslegers ausgerichtet zum Antreiben des Handgelenks relativ zu dem Handgelenksgehäuse drehbar um eine erste Drehachse angeordnet. Der erste Übertragungsmechanismus ist ebenfalls in dem Handgelenksgehäuse angeordnet und ist zwischen dem Handgelenk und dem ersten Antrieb positioniert. Das Drehelement ist drehbar an einem distalen Ende des Handgelenks entlang einer zweiten Drehachse gelagert. Der zweite Antrieb ist in dem Handgelenksgehäuse mit seiner Antriebswelle quer zur Längserstreckung des Armauslegers ausgerichtet zum Antreiben des Drehelements um eine zweite Drehachse angeordnet. Der zweite Übertragungsmechanismus ist im Handgelenksgehäuse angeordnet und zwischen dem zweiten Antrieb und dem Drehelement angeordnet.

Gemäß der EP 2 022 609 A1 sind der zweite und der dritte Antrieb mit ihren jeweiligen Antriebswellen sich parallel und in einem Abstand zur Armachse erstreckend in dem Handgrundgehäuse angeordnet, wohingegen sich der erste Antrieb außerhalb des Handgrundgehäuses befindet.

Aufgabe der Erfindung ist es, einen verbesserten Industrieroboter anzugeben. Insbesondere ist es Aufgabe der Erfindung, einen Industrieroboter mit einer verbesserten Führung von Versorgungsleitungen durch einen Armausleger des Industrieroboters zu schaffen, und/oder einen in seiner Baugröße kompakten Armausleger zu schaffen.

Die Aufgabe der Erfindung wird gelöst durch einen Industrieroboter, aufweisend einen Roboterarm, der eine Schwinge und einen an der Schwinge schwenkbar gelagerten Armausleger aufweist,
- der ein schwenkbar an der Schwinge gelagertes Armgehäuse aufweist,
- der ein mittels eines ersten Antriebs, der eine erste Antriebswelle aufweist, um eine sich in Längserstreckung des Armauslegers erstreckende Armachse drehbar an dem Armgehäuse gelagertes Handgrundgehäuse aufweist, und
- der ein mittels eines zweiten Antriebs, der eine zweite Antriebswelle aufweist, um eine erste Handachse relativ zum Handgrundgehäuse verstellbares erstes Handglied und ein mittels eines dritten Antriebs, der eine dritte Antriebswelle aufweist, um eine zweite Handachse relativ zum ersten Handglied verstellbares zweites Handglied aufweist, wobei
sowohl der erste Antrieb, als auch der zweite Antrieb und der dritte Antrieb mit ihren jeweiligen Antriebswellen sich zumindest im Wesentlichen parallel und in einem Abstand zur Armachse erstreckend in dem Handgrundgehäuse angeordnet sind.

Industrieroboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Roboter weisen üblicherweise einen Roboterarm mit mehreren über Gelenke verbundene Glieder und programmierbare Steuerungen (Steuervorrichtungen) auf, die während des Betriebs die Bewegungsabläufe des Roboters steuern bzw. regeln. Die Glieder werden über Antriebe, insbesondere elektrische Antriebe, die von der Steuervorrichtung angesteuert werden, insbesondere bezüglich der Bewegungsachsen bewegt.

Eine beispielhafte Ausführungsform eines Industrieroboters kann ein Sechsachs-Knickarmroboter sein. Ein solcher Industrieroboter kann ein Grundgestell aufweisen, auf dem ein Karussell drehbar gelagert ist. An dem Karussell kann eine Schwinge schwenkbar gelagert sein. Die Schwinge kann insbesondere um eine horizontale Achse schwenkbar an einem um eine vertikale Achse drehbaren Karussell gelagert sein. An der Schwinge ist ein Armausleger schwenkbar oder drehbar gelagert. Das Grundgestell, das Karussell, die Schwinge und der Armausleger bilden folglich vier Glieder des Industrieroboters, die über drei Gelenke beweglich miteinander verbunden sind. Jedes der drei Gelenke kann mittels eines eigenen Antriebs, der insbesondere einen elektrischen Motor umfassen kann, automatisch bewegt werden.

Der Armausleger selbst kann drei weitere Gelenke aufweisen. So kann, wie erfindungsgemäß beschrieben, der Armausleger ein schwenkbar an der Schwinge gelagertes Armgehäuse aufweisen. An dem Armgehäuse kann ein Handgrundgehäuse mittels eines ersten Antriebs um eine sich in Längserstreckung des Armauslegers erstreckende Armachse drehbar gelagert sein.

Zwischen Armgehäuse und Handgrundgehäuse kann somit ein viertes Gelenk des Industrieroboters ausgebildet sein. Dieses vierte Gelenk ist mittels des ersten erfindungsgemäßen Antriebs automatisch bewegbar. Der erste Antrieb weist eine erste Antriebswelle auf. Um diese erste Antriebswelle kann sich eine Abtriebswelle, insbesondere eine Motorwelle des Antriebs drehen. An dem Handgrundgehäuse wiederum ist ein erstes Handglied schwenkbar gelagert. Zwischen dem Handgrundgehäuse und dem erste Handglied kann somit ein fünftes Gelenk des Industrieroboters ausgebildet sein. Dieses fünfte Gelenk ist mittels des zweiten erfindungsgemäßen Antriebs automatisch bewegbar. Der zweite Antrieb weist eine zweite Antriebswelle auf. Mittels des zweiten Antriebs ist die erste Handachse relativ zum Handgrundgehäuse verstellbar. An dem ersten Handglied ist ein zweites Handglied bewegbar gelagert. Insbesondere kann das zweite Handglied ein am ersten Handglied drehbar gelagerter Roboterflansch sein. An dem Roboterflansch kann ein von dem Industrieroboter zu bewegendes und/oder zu betätigendes Werkzeug befestigt sein. Zwischen dem ersten Handglied und zweiten Handglied kann somit ein sechstes Gelenk des Industrieroboters ausgebildet sein. Dieses sechste Gelenk ist mittels des dritten erfindungsgemäßen Antriebs automatisch bewegbar. Der dritte Antrieb weist eine dritte Antriebswelle auf. Mittels des dritten Antriebs ist das zweite Handglied relativ zum ersten Handglied verstellbar.

Indem sowohl der erste Antrieb, als auch der zweite Antrieb und der dritte Antrieb mit ihren jeweiligen Antriebswellen sich zumindest im Wesentlichen parallel und in einem Abstand zur Armachse erstreckend in dem Handgrundgehäuse angeordnet sind, kann trotz einer kompakten Baugröße des Armauslegers zwischen den drei Antrieben entlang der Armachse ein freier, sich insbesondere längs des Armauslegers erstreckender Bauraum geschaffen werden, um darin beispielsweise eine Versorgungsleitung führen zu können. Eine solche freie Führung einer Versorgungsleitung kann dabei gegenüber bekannten technischen Lösungen die freie Länge der Versorgungsleitung vergrößern, so dass eine aufgrund von Bewegungen des Industrieroboters auftretende Torsion der Versorgungsleitung innerhalb des Armauslegers sich über eine möglichst große Länge verteilen kann, wodurch die Torsionskräfte bzw. Torsionsspannungen auf die Versorgungsleitung reduziert werden können. Dadurch kann die Lebensdauer der Versorgungsleitung und folglich die Betriebsdauer des Industrieroboters verlängert werden.

Wenn die Antrieb derart in dem Handgrundgehäuse angeordnet sind, dass sie sich mit ihren jeweiligen Antriebswellen zumindest im Wesentlichen parallel und in einem Abstand zur Armachse erstreckend, so kann dies bedeuten, dass die Antriebswellen exakt parallel zur Armachse bzw. zur Längserstreckung des Armauslegers ausgerichtet sind. Es kann aber auch bedeuten, dass die Antrieb mit ihren Antriebswellen geringfügig von einer parallelen Ausrichtung abweichend in dem Handgrundgehäuse angeordnet sein können, soweit aufgrund eines ausreichenden Abstands der Antriebe von der Armachse bzw. voneinander eine Versorgungsleitung weiterhin in einem freien Bauraum zwischen den drei Antrieben ohne wesentliche Biegung oder wesentliche Knickung hindurchgeführt werden kann. Die Versorgungsleitung läuft dabei seitlich an allen drei Antrieben in Längsausrichtung der Antriebswellen der Antriebe und im Wesentlichen parallel zu diesen Antrieben durch das Handgrundgehäuse hindurch.

In einer erfindungsgemäßen Ausführungsform kann das Armgehäuse mit dem Handgrundgehäuse über ein Hohlwellengetriebe drehbar verbunden sein, das eine Hohlwelle aufweist, durch die wenigstens eine Versorgungsleitung, insbesondere aufweisend wenigstens eine elektrische, pneumatisch und/oder hydraulische Leitung, geführt ist, die sich zumindest im Wesentlichen entlang der Armachse in dem Handgrundgehäuse erstreckt, wobei der erste Antrieb, der zweite Antrieb und der dritte Antrieb in einem radialen Abstand von der Armachse die wenigstens eine Versorgungsleitung von außen umgebend in dem Handgrundgehäuse angeordnet sind.

Dabei kann, wie auch in anderen erfindungsgemäßen Ausführungsformen, das Armgehäuse ein zwischen der Schwinge und dem Handgrundgehäuse angeordnetes, insbesondere ein zwischen dem dritten und vierten Gelenk angeordnetes Glied des Industrieroboters bilden. Das Handgrundgehäuse kann dabei, wie auch in anderen erfindungsgemäßen Ausführungsformen, ein zwischen dem Armgehäuse und einer schwenkbaren Hand des Industrieroboters angeordnetes, insbesondere ein zwischen dem vierten und fünftem Gelenk angeordnetes Glied des Industrieroboters bilden. Der Industrieroboter kann dabei ein Sechsachs-Knickarmroboter sein.

Die Hohlwelle weist einen offenen Innendurchmesser auf, der mindestens so groß ist, dass die Versorgungsleitung lose hindurchgeführt sein kann. Insoweit kann der erste Antrieb, der zweite Antrieb und der dritte Antrieb in einem solchen radialen Abstand von der Armachse in dem Handgrundgehäuse angeordnet sein, dass in einer Längsbetrachtung die Antriebe, insbesondere die Motorgehäuse der Antriebe den offenen Innendurchmesser, d.h. die lichte Weite der Hohlwelle in einer projizierten Ansicht nicht überdecken bzw. nicht überschneiden.

Dabei kann, wie auch in anderen erfindungsgemäßen Ausführungsformen, als Armachse diejenige Achse verstanden werden, um die das Handgrundgehäuse relativ zu dem Armgehäuse dreht.

In einer erfindungsgemäßen Weiterbildung kann innerhalb des Handgrundgehäuses ein die wenigstens eine Versorgungsleitung, insbesondere die wenigstens eine elektrische, pneumatisch und/oder hydraulische Leitung, in Längsrichtung umgebendes, eine Mantelwand aufweisendes Schutzrohr angeordnet sein, um dessen Mantelwand der erste Antrieb, der zweite Antrieb und der dritte Antrieb angeordnet sind.

Das Schutzrohr kann also, anders ausgedrückt, koaxial zur Armachse ausgerichtet in dem Handgrundgehäuse angeordnet sein. Das Schutzrohr kann an dem Armgehäuse befestigt sein. Alternativ kann das Schutzrohr an dem Handgrundgehäuse befestigt sein. Das Schutzrohr kann auch an einem Abtriebsglied oder Antriebsglied eines das Handgrundgehäuse drehbar mit dem Armgehäuse verbindenden Hohlwellengetriebes befestigt sein. Das Schutzrohr kann mit der Hohlwelle des Hohlwellengetriebes fluchten.

In allen erfindungsgemäßen Ausführungsformen kann der erste Antrieb, der zweite Antrieb und der dritte Antrieb mit ihren jeweiligen Antriebswellen um jeweils 90 Winkelgrad versetzt um die Armachse verteilt in dem Handgrundgehäuse angeordnet sein. Anders ausgedrückt können die Antriebswellen von zwei der drei Antriebe in derselben Ebene liegen und die Antriebswelle des dritten Antriebs kann in einer gemeinsamen Ebene mit der Antriebswelle einer der beiden anderen Antrieb liegen. Die drei Antriebswellen können also in zwei senkrecht aufeinander stehenden Ebenen liegen, die sich nicht mit der Armachse schneiden.

In allen erfindungsgemäßen Ausführungsformen können der erste Antrieb, der zweite Antrieb und der dritte Antrieb jeweils ein Motorgehäuse aufweisen, das zumindest in einem der Armachse zuweisenden Sektor des Motorgehäuses, insbesondere einem sich wenigstens über 90 Winkelgrad erstreckenden der Armachse zuweisenden Sektor des Motorgehäuses, eine kreisbogenförmige Gehäusemantelwand aufweist.

Die Motorgehäuse können also generell vollständig eine im Querschnitt kreiszylindrische Gehäusemantelwand aufweisen. In dieser variierten Ausführungsform können die Antriebe jedoch jeweils ein Motorgehäuse aufweisen, das lediglich oder zumindest in einem der Armachse zuweisenden Sektor des Motorgehäuses eine im Querschnitt kreisbogenförmige Gehäusemantelwand aufweisen und im Übrigen beispielsweise ebene, senkrecht aufeinander stehende Gehäusewände aufweisen, also Ecken, insbesondere rechtwinkelige Ecken ausbilden.

In einer speziellen Ausführungsform können die Antriebe in einem der Armachse zuweisenden Sektor des Motorgehäuses und in einem von der Armachse abweisenden Sektor des Motorgehäuses eine im Querschnitt kreisbogenförmige Gehäusemantelwand aufweisen und im Übrigen beispielsweise ebene, senkrecht aufeinander stehende Gehäusewände aufweisen, also Ecken, insbesondere rechtwinkelige Ecken ausbilden.

Dabei kann der erste Antrieb, der zweite Antrieb und der dritte Antrieb jeweils ein Motorgehäuse aufweisen, das zumindest in einem der Armachse zuweisenden Sektor des Motorgehäuses, insbesondere einem sich wenigstens über 90 Winkelgrad erstreckenden der Armachse zuweisenden Sektor des Motorgehäuses, eine Gehäusewand konstanter Dicke aufweist.

Alternativ oder ergänzend können der erste Antrieb, der zweite Antrieb und der dritte Antrieb jeweils ein Motorgehäuse mit einem abtriebsseitige Flansch, einem dem abtriebsseitigen Flansch axial gegenüberliegenden drehgeberseitigen Flansch und einem zwischen den beiden Flanschen angeordneten Mittengehäuseabschnitt aufweisen, der rohrförmig mit einer im Querschnitt konstanten Ringwanddicke ausgebildet ist.

In allen erfindungsgemäßen Ausführungsformen können der zweite Antrieb und/oder der dritte Antrieb an ihren abtriebsseitigen Flanschen jeweils ein Winkelgetriebe, insbesondere ein um 90 Winkelgrad das Drehmoment umlenkendes Winkelgetriebe aufweisen.

Durch den Einbau von Winkelgetrieben können beispielsweise Antriebsriemenscheiben, die über Antriebsriemen mit dem ersten Handglied und/oder dem zweiten Handglied verbunden sind, in einer gleichartigen Bauweise weiterverwendet werden, wie dies bei den dem Fachmann bekannten, mit ihren Motorwellen quer, d.h. senkrecht zur Armachse eingebauten Antrieben bisher schon der Fall war.

In einer Weiterbildung kann das Winkelgetriebe oder die Winkelgetriebe abtriebsseitig jeweils eine Antriebsriemenscheibe aufweisen, welche das Drehmoment über einen auf der Antriebsriemenscheibe laufenden Antriebsriemen auf eine mit dem ersten Handglied und/oder dem zweiten Handglied verbundene, insbesondere über ein zwischengeschaltetes Getriebe verbundene Abtriebsriemenscheibe überträgt.

In allen erfindungsgemäßen Ausführungsformen kann der erste Antrieb ein Antriebsritzel aufweisen, das zur Bildung einer Stirnradgetriebestufe auf einem Abtriebsstirnrad kämmt, das mit dem Armgehäuse verbunden ist und/oder mit einer antriebsseitigen Eingangswelle eines das Armgehäuse mit dem Handgrundgehäuse drehbar verbindenden Hohlwellengetriebes verbunden ist.

Dadurch kann der erste Antrieb aus dem Zentrum des Handgrundgehäuses gerückt werden, so dass Bauraum geschaffen wird, um darin beispielsweise eine Versorgungsleitung führen zu können.

Ein Ausführungsbeispiel der Erfindung ist exemplarisch in den beigefügten schematischen Zeichnungen dargestellt. Es zeigen:
- Fig. 1: eine perspektivische Ansicht eines Industrieroboters mit einem erfindungsgemäßen Armausleger,
- Fig. 2: eine perspektivische Ansicht des erfindungsgemäßen Armauslegers in Alleinstellung mit einer Anordnung von Komponenten des Armauslegers,
- Fig. 3: eine Querschnittsdarstellung durch den Armausleger gemäß Fig. 2, und
- Fig. 4: eine perspektivische Ansicht eines beispielhaften Antriebs aus dem Armausleger gemäß Fig. 2.

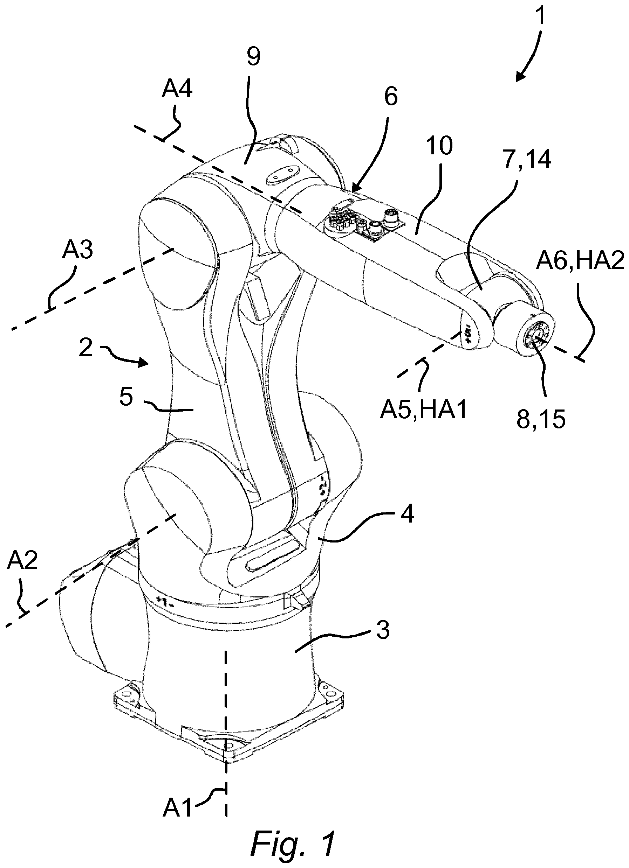

Die Fig. 1 zeigt einen Industrieroboter 1, der einen Roboterarm 2 aufweist. Der Roboterarm 2 umfasst im Falle des vorliegenden Ausführungsbeispiels mehrere, nacheinander angeordnete und mittels Gelenke verbundene Glieder. Bei den Gliedern handelt es sich insbesondere um ein Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Armausleger 6 und eine vorzugsweise mehrachsige Roboterhand 7 mit einer als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Drehachse A2 schwenkbar gelagert. Am oberen Ende der Schwinge 5 ist wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6.

Der Armausleger 6 weist im Falle des vorliegenden Ausführungsbeispiels ein schwenkbar an der Schwinge 5 gelagertes Armgehäuse 9 auf. An dem Armgehäuse 9 ist ein Handgrundgehäuse 10 des Armauslegers 6 um die Achse A4 drehbar gelagert.

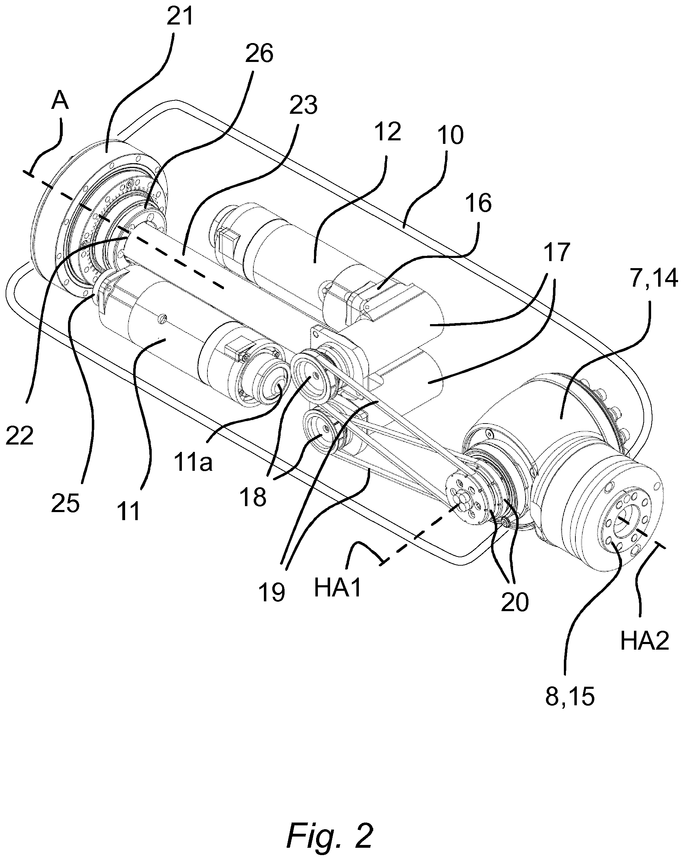

In der Fig. 2 ist der Armausleger 6 in Alleinstellung und mit zeichnerisch aufgebrochenem Handgrundgehäuse 10 näher dargestellt.

Das Handgrundgehäuse 10 ist im vorliegenden Ausführungsbeispiel mittels eines ersten Antriebs 11, der eine erste Antriebswelle 11a aufweist, um eine sich in Längserstreckung des Armauslegers 6 erstreckende Armachse A drehbar an dem Armgehäuse 9 gelagert (Fig. 1).

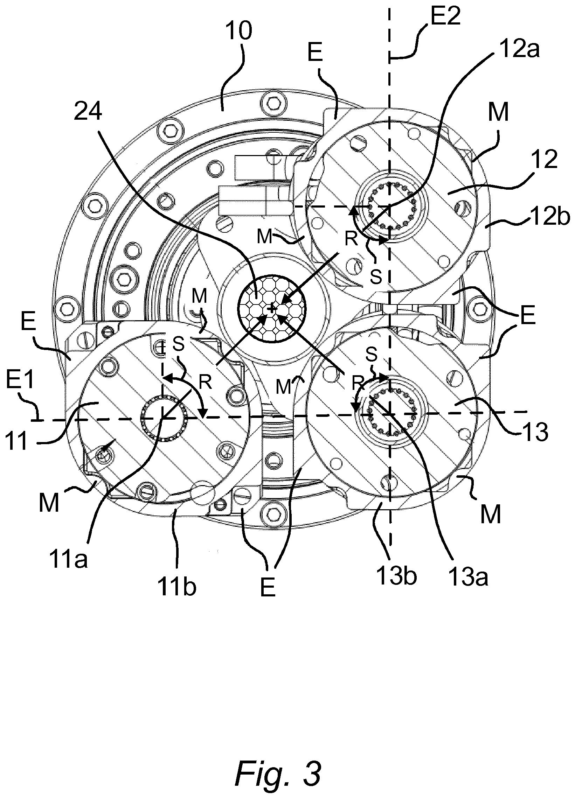

Ein erstes Handglied 14 ist mittels eines zweiten Antriebs 12, der eine zweite Antriebswelle 12a (Fig. 3) aufweist, um eine erste Handachse HA1 relativ zum Handgrundgehäuse 10 verstellbar, im vorliegenden Ausführungsbeispiel schwenkbar gelagert.

Ein zweites Handglied 15 ist mittels eines dritten Antriebs 13, der eine dritte Antriebswelle 13a (Fig. 3) aufweist, um eine zweite Handachse HA2 relativ zum ersten Handglied 14 verstellbar, im vorliegenden Ausführungsbeispiel drehbar gelagert.

Im dargestellten Ausführungsbeispiel weisen der zweite Antrieb 12 und der dritte Antrieb 13 an ihren abtriebsseitigen Flanschen 16 jeweils ein Winkelgetriebe 17, insbesondere ein um 90 Winkelgrad das Drehmoment umlenkendes Winkelgetriebe 17 auf. Durch die Winkelgetriebe 17 werden die um die längs zur Längserstreckung des Handgrundgehäuse 10 wirkenden Drehmomente um 90 Winkelgrad auf jeweils eine Antriebsriemenscheibe 18 umgelenkt. Auf jeder Antriebsriemenscheibe 18 läuft ein Antriebsriemen 19. Durch die Antriebsriemen 19 ist jede Antriebsriemenscheibe 18 mit einer Abtriebsriemenscheibe 20 verbunden. Jeweils eine der Abtriebsriemenscheiben 20 ist mit dem ersten Handglied 14 bzw. dem zweiten Handglied 15 verbunden.

Jedes Winkelgetriebe 17 weist also jeweils eine Antriebsriemenscheibe 18 auf, welche das Drehmoment über einen auf der Antriebsriemenscheibe 18 laufenden Antriebsriemen 19 auf eine mit dem ersten Handglied 14 und/oder dem zweiten Handglied 15 verbundene, insbesondere über ein zwischengeschaltetes Getriebe verbundene Abtriebsriemenscheibe 10 überträgt.

In der in Fig. 2 näher gezeigten Ausführungsform ist das Armgehäuse 9 mit dem Handgrundgehäuse 10 über ein Hohlwellengetriebe 21 drehbar verbunden. Das Hohlwellengetriebe 21 weist eine Hohlwelle 22 auf, durch die wenigstens eine (nicht näher dargestellte) Versorgungsleitung geführt ist.

Die Versorgungsleitung läuft räumlich innerhalb eines Schutzrohres 23. Das Schutzrohres 23 ist in dem Handgrundgehäuse 10 angeordnet. Um das Schutzrohr 23 sind erfindungsgemäß der erste Antrieb 11, der zweite Antrieb 12 und der dritte Antrieb 12 angeordnet.

Das Schutzrohr 23 kann also, anders ausgedrückt, koaxial zur Armachse A ausgerichtet in dem Handgrundgehäuse 10 angeordnet sein. Das Schutzrohr 23 kann wie dargestellt an dem Hohlwellengetriebe 21 befestigt sein. Das Schutzrohr 23 fluchtet, wie in Fig. 3 dargestellt, mit der Hohlwelle 22 des Hohlwellengetriebes 21.

Wie in der Fig. 2 dargestellt weist der erste Antrieb 11 ein Antriebsritzel 25 auf, das zur Bildung einer Stirnradgetriebestufe auf einem Abtriebsstirnrad 26 kämmt. Das Abtriebsstirnrad 26 ist mit einer antriebsseitigen Eingangswelle bzw. der Hohlwelle 22 des das Armgehäuse 9 mit dem Handgrundgehäuse 10 drehbar verbindenden Hohlwellengetriebes 21 verbunden. Dadurch kann der erste Antrieb 11 aus dem Zentrum des Handgrundgehäuses 10 gerückt werden, so dass Bauraum geschaffen wird, um darin eine Versorgungsleitung 24 führen zu können.

Wie in der Fig. 3 in einer Querschnittsansicht verdeutlicht, erstrecken sich der erste Antrieb 11, der zweite Antrieb 12 und der dritte Antrieb 13 in der dargestellten Ausführungsform zumindest im Wesentlichen entlang der Armachse A (senkrecht zur Querschnittsebene der Fig. 3) in dem Handgrundgehäuse 10, wobei der erste Antrieb 11, der zweite Antrieb 12 und der dritte Antrieb 13 in einem radialen Abstand R von der Armachse A die wenigstens eine Versorgungsleitung 24 von außen umgebend in dem Handgrundgehäuse 10 angeordnet sind.

Die Hohlwelle 22 weist einen offenen Innendurchmesser auf, der mindestens so groß ist, dass die Versorgungsleitung 24 lose hindurchgeführt sein kann, wie in Fig. 3 gezeigt. Insoweit sind in der in Fig. 3 dargestellten Ausführungsform der erste Antrieb 11, der zweite Antrieb 12 und der dritte Antrieb 13 in einem solchen radialen Abstand R von der Armachse A in dem Handgrundgehäuse 10 angeordnet, dass in einer Längsbetrachtung, also in Draufsicht auf die Querschnittsebene der Fig. 3 die Antriebe 11, 12, 13, insbesondere Motorgehäuse 11b, 12b, 13b der Antriebe 11, 12, 13 den offenen Innendurchmesser, d.h. die lichte Weite der Hohlwelle 22 in einer projizierten Ansicht nicht überdecken bzw. nicht überschneiden, wie dies in Fig. 3 zu sehen ist.

Sowohl der erste Antrieb 11, als auch der zweite Antrieb 12 und der dritte Antrieb 13 sind mit ihren jeweiligen Antriebswellen 11a, 12a, 13a sich zumindest im Wesentlichen parallel und in einem Abstand R zur Armachse A erstreckend in dem Handgrundgehäuse 10 angeordnet.

Indem sowohl der erste Antrieb 11, als auch der zweite Antrieb 12 und der dritte Antrieb 13 mit ihren jeweiligen Antriebswellen 11a, 12a, 13a sich zumindest im Wesentlichen parallel und in einem Abstand R zur Armachse A erstreckend in dem Handgrundgehäuse 10 angeordnet sind, kann trotz einer kompakten Baugröße des Armauslegers 6 zwischen den drei Antrieben 11, 12, 13 entlang der Armachse A ein freier, sich insbesondere längs des Armauslegers erstreckender Bauraum (Fig. 2) geschaffen werden, um darin die Versorgungsleitung 24 führen zu können. In dem so geschaffenen Bauraum kann, wie in Fig. 2 dargestellt auch das Schutzrohr 23 angeordnet sein, in dem die Versorgungsleitung 24 geführt ist.

Die Versorgungsleitung 24 (Fig. 3) läuft dabei seitlich an allen drei Antrieben 11, 12, 13 in Längsausrichtung der Antriebswellen 11a, 12a, 13a der Antriebe 11, 12, 13 und im Wesentlichen parallel zu diesen Antrieben 11, 12, 13 durch das Handgrundgehäuse 10 hindurch. Dabei kann, wie in allen erfindungsgemäßen Ausführungsformen, als Armachse A diejenige Achse verstanden werden, um die das Handgrundgehäuse 10 relativ zu dem Armgehäuse 9 dreht.

Wie in der Fig. 3 in der Querschnittsansicht verdeutlicht, sind der erste Antrieb 11, der zweite Antrieb 12 und der dritte Antrieb 13 mit ihren jeweiligen Antriebswellen 11a, 12a, 13a um jeweils 90 Winkelgrad versetzt um die Armachse A verteilt in dem Handgrundgehäuse 10 angeordnet. Anders ausgedrückt können die Antriebswellen 11a, 12a, 13a von zwei der drei Antriebe 11, 12, 13 zumindest annähernd oder exakt in derselben Ebene E1 liegen und die Antriebswelle 13a des dritten Antriebs 13 kann in einer gemeinsamen Ebene E2 mit der Antriebswelle 12a einer der beiden anderen Antrieb 12 liegen. Die drei Antriebswellen 11a, 12a, 13a können also in zwei senkrecht aufeinander stehenden Ebenen E1 und E2 liegen, die sich nicht mit der Armachse A schneiden.

Sowohl der erste Antrieb 11, als auch der zweite Antrieb 12 und der dritte Antrieb 13 weisen im dargestellten Ausführungsbeispiel jeweils ein Motorgehäuse 11b, 12b, 13b auf, das zumindest in einem der Armachse A zuweisenden Sektor S des Motorgehäuses 11b, 12b, 13b, insbesondere einem sich wenigstens über 90 Winkelgrad erstreckenden der Armachse A zuweisenden Sektor des Motorgehäuses 11b, 12b, 13b, eine kreisbogenförmige Gehäusemantelwand M aufweisen.

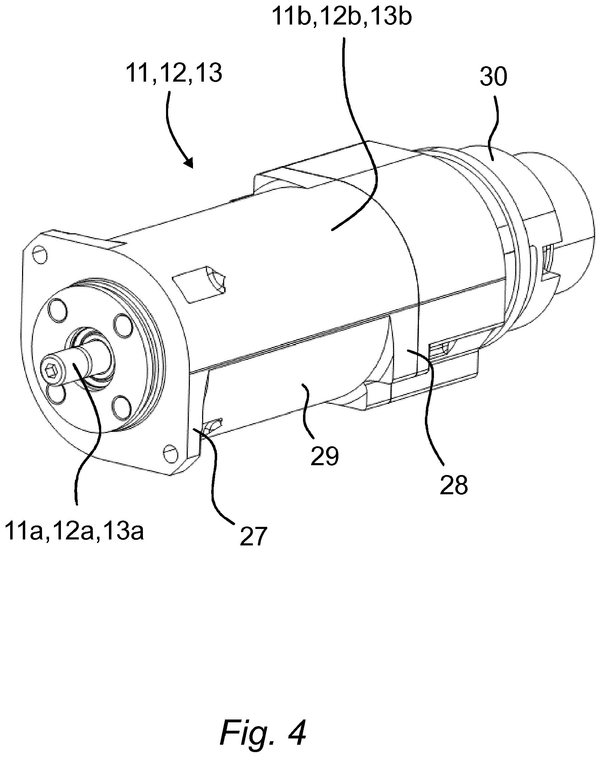

Die Motorgehäuse 11b, 12b, 13b können also generell vollständig eine im Querschnitt kreiszylindrische Gehäusemantelwand M aufweisen. In dieser variierten Ausführungsform können die Antriebe 11, 12, 13 jedoch jeweils ein Motorgehäuse 11b, 12b, 13b aufweisen, das lediglich oder zumindest in einem der Armachse A zuweisenden Sektor S des Motorgehäuses 11b, 12b, 13b eine im Querschnitt kreisbogenförmige Gehäusemantelwand M aufweisen und im Übrigen beispielsweise, wie in Fig. 4 dargestellt, Ecken E ausbilden.

In einer speziellen Ausführungsform, wie in Fig. 3 gezeigt, können die Antriebe 11, 12, 13 in einem der Armachse A zuweisenden Sektor S der Motorgehäuse 11b, 12b, 13b und in einem von der Armachse A abweisenden Sektor der Motorgehäuse 11b, 12b, 13b eine im Querschnitt kreisbogenförmige Gehäusemantelwand M aufweisen.

Wie in Fig. 4 in einer Alleinstellung eines beispielhaften Antriebs 11, 12, 13 mit einem Drehgeber 30 gezeigt, können der erste Antrieb 11, der zweite Antrieb 12 und/oder der dritte Antrieb 13 jeweils ein Motorgehäuse 11b, 12b, 13b mit einem abtriebsseitige Flansch 27, einem dem abtriebsseitigen Flansch 27 axial gegenüberliegenden drehgeberseitigen Flansch 28 und einem zwischen den beiden Flanschen 27, 28 angeordneten Mittengehäuseabschnitt 29 aufweisen, der rohrförmig mit einer im Querschnitt konstanten Ringwanddicke ausgebildet ist.

## Patentansprüche

1. Industrieroboter, aufweisend
einen Roboterarm (2), der eine Schwinge (5) und einen an der Schwinge (5) schwenkbar gelagerten Armausleger (6) aufweist,
- der ein schwenkbar an der Schwinge (5) gelagertes Armgehäuse (9) aufweist,
- der ein mittels eines ersten Antriebs (11), der eine erste Antriebswelle (11a) aufweist, um eine sich in Längserstreckung des Armauslegers (6) erstreckende Armachse (A) drehbar an dem Armgehäuse (9) gelagertes Handgrundgehäuse (10) aufweist, und
- der ein mittels eines zweiten Antriebs (12), der eine zweite Antriebswelle (12a) aufweist, um eine erste Handachse (HA1) relativ zum Handgrundgehäuse (10) verstellbares erstes Handglied (14) und ein mittels eines dritten Antriebs (13), der eine dritte Antriebswelle (13a) aufweist, um eine zweite Handachse (HA2) relativ zum ersten Handglied (14) verstellbares zweites Handglied (15) aufweist,
**dadurch gekennzeichnet, dass**
sowohl der erste Antrieb (11), als auch der zweite Antrieb (12) und der dritte Antrieb (13) mit ihren jeweiligen Antriebswellen (11a, 12a, 13a) sich zumindest im Wesentlichen parallel und in einem Abstand zur Armachse (A) erstreckend in dem Handgrundgehäuse (10) angeordnet sind.

2. Industrieroboter nach Anspruch 1, bei dem das Armgehäuse (9) mit dem Handgrundgehäuse (10) über ein Hohlwellengetriebe (21) drehbar verbunden ist, das eine Hohlwelle (22) aufweist, durch die wenigstens eine Versorgungsleitung (24), insbesondere aufweisend wenigstens eine elektrische, pneumatisch und/oder hydraulische Leitung, geführt ist, die sich zumindest im Wesentlichen entlang der Armachse (A) in dem Handgrundgehäuse (10) erstreckt, wobei der erste Antrieb (11), der zweite Antrieb (12) und der dritte Antrieb (13) in einem radialen Abstand (R) von der Armachse (A) die wenigstens eine Versorgungsleitung (24) von außen umgebend in dem Handgrundgehäuse (10) angeordnet sind.

3. Industrieroboter nach Anspruch 2, bei dem innerhalb des Handgrundgehäuses (10) ein die wenigstens eine Versorgungsleitung (24), insbesondere die wenigstens eine elektrische, pneumatisch und/oder hydraulische Leitung, in Längsrichtung umgebendes, eine Mantelwand aufweisendes Schutzrohr (23) angeordnet ist, um dessen Mantelwand der erste Antrieb (11), der zweite Antrieb (12) und der dritte Antrieb (13) angeordnet sind.

4. Industrieroboter nach einem der Ansprüche 1 bis 3, bei dem der erste Antrieb (11), der zweite Antrieb (12) und der dritte Antrieb (13) mit ihren jeweiligen Antriebswellen (11a, 12a, 13a) um jeweils 90 Winkelgrad versetzt um die Armachse (A) verteilt in dem Handgrundgehäuse (10) angeordnet sind.

5. Industrieroboter nach einem der Ansprüche 1 bis 4, bei dem der erste Antrieb (11), der zweite Antrieb (12) und der dritte Antrieb (13) jeweils ein Motorgehäuse (11b, 12b, 13b) aufweist, das zumindest in einem der Armachse (A) zuweisenden Sektor (S) des Motorgehäuses (11b, 12b, 13b), insbesondere einem sich wenigstens über 90 Winkelgrad erstreckenden der Armachse (A) zuweisenden Sektor (S) des Motorgehäuses(11b, 12b, 13b), eine kreisbogenförmige Gehäusemantelwand (M) aufweist.

6. Industrieroboter nach Anspruch 5, bei dem der erste Antrieb (11), der zweite Antrieb (12) und der dritte Antrieb (13) jeweils ein Motorgehäuse (11b, 12b, 13b) aufweist, das zumindest in einem der Armachse (A) zuweisenden Sektor (S) des Motorgehäuses (11b, 12b, 13b), insbesondere einem sich wenigstens über 90 Winkelgrad erstreckenden der Armachse (A) zuweisenden Sektor (S) des Motorgehäuses (11b, 12b, 13b), eine Gehäusewand (M) konstanter Dicke aufweist.

7. Industrieroboter nach Anspruch 5 oder 6, bei dem der erste Antrieb (11), der zweite Antrieb (12) und der dritte Antrieb (13) jeweils ein Motorgehäuse (11b, 12b, 13b) mit einem abtriebsseitige Flansch (27), einem dem abtriebsseitigen Flansch (27) axial gegenüberliegenden drehgeberseitigen Flansch (28) und einem zwischen den beiden Flanschen (27, 28) angeordneten Mittengehäuseabschnitt (29) aufweist, der rohrförmig mit einer im Querschnitt konstanten Ringwanddicke ausgebildet ist.

8. Industrieroboter nach einem der Ansprüche 1 bis 7, bei dem der zweite Antrieb (12) und/oder der dritte Antrieb (13) an ihren abtriebsseitigen Flanschen (16, 27) jeweils ein Winkelgetriebe (17), insbesondere ein um 90 Winkelgrad das Drehmoment umlenkendes Winkelgetriebe (17) aufweisen.

9. Industrieroboter nach Anspruch 8, bei dem das Winkelgetriebe (17) oder die Winkelgetriebe (17) abtriebsseitig jeweils eine Antriebsriemenscheibe (18) aufweist, welche das Drehmoment über einen auf der Antriebsriemenscheibe (18) laufenden Antriebsriemen (19) auf eine mit dem ersten Handglied (14) und/oder dem zweiten Handglied (15) verbundene, insbesondere über ein zwischengeschaltetes Getriebe verbundene Abtriebsriemenscheibe (20) überträgt.

10. Industrieroboter nach einem der Ansprüche 1 bis 9, bei dem der erste Antrieb (11) ein Antriebsritzel (25) aufweist, das zur Bildung einer Stirnradgetriebestufe auf einem Abtriebsstirnrad (26) kämmt, das mit dem Armgehäuse (9) verbunden ist und/oder mit einer antriebsseitigen Eingangswelle eines das Armgehäuse (9) mit dem Handgrundgehäuse (10) drehbar verbindenden Hohlwellengetriebes (12) verbunden ist.

## Claims

1. Industrial robot comprising
a robot arm (2) having a linkage (5) and an arm extension (6) mounted so as to be pivotable at said linkage (5),
- said arm extension comprising an arm housing (9) mounted so as to be pivotable at the linkage (5),
- said arm extension comprising a primary hand housing (10) mounted on the arm housing (9) so as to rotate around an arm axis (A) extending in a longitudinal dimension of the arm extension (6), by a first actuator (11),
which has a first drive shaft (11a),
- said arm extension comprising a first hand element (14) that is adjustable around a first hand axis (HA1) relative to the primary hand housing (10) by a second actuator (12), which has a second drive shaft (12a), and a second hand element (15) which is adjustable around a second hand axis (HA2) relative to the first hand element (14) by a third actuator (13), which has a third drive shaft (13a),
**characterised in that**
both the first actuator (11) and also the second actuator (12) and the third actuator (13) are arranged in the primary hand housing (10) with their respective drive shafts (11a, 12a, 13a) extending at least essentially parallel to and at a distance from the arm axis (A).

2. Industrial robot according to claim 1, wherein the arm housing (9) is connected rotatably to the primary hand housing (10) via a hollow shaft gear (21) which comprises a hollow shaft (22), through which at least one supply line (24), comprising in particular at least one electrical, pneumatic and/or hydraulic line, is routed, and which extends at least essentially along the arm axis (A) in the primary hand housing (10), wherein the first actuator (11), the second actuator (12) and the third actuator (13) are arranged at a radial distance (R) from the arm axis (A), and externally enclose the at least one supply line (24) in the primary hand housing (10).

3. Industrial robot according to claim 2, wherein within the primary hand housing (10) a protective pipe (23) is arranged which has a casing wall and which surrounds the at least one supply line (24) in longitudinal direction, in particular the at least one electrical, pneumatic and/or hydraulic line, around the casing wall of which protective pipe the first actuator (11), the second actuator (12) and the third actuator (13) are arranged.

4. Industrial robot according to any of claims 1 to 3, wherein the first actuator (11), the second actuator (12) and the third actuator (13) are arranged distributed around the arm axis (A) in the primary hand housing (10) with their respective drive shafts (11a, 12a, 13a) offset by a 90 degree angle.

5. Industrial robot according to any of claims 1 to 4, wherein the first actuator (11), the second actuator (12) and the third actuator (13) each have a motor housing (11b, 12b, 13b) which has a circular arc-shaped housing casing wall (M), at least in a sector (S) of the motor housing (11b, 12b, 13b) facing the arm axis (A), in particular a sector (S) of the motor housing (11b 12b, 13b) facing the arm axis (A) and extending at least over a 90 degree angle.

6. Industrial robot according to claim 5, wherein the first actuator (11), the second actuator (12) and the third actuator (13) each have a motor housing (11b, 12b, 13b) which has a housing wall (M) of constant thickness at least in a sector (S) of the motor housing (11b, 12b, 13b) facing the arm axis (A), in particular a sector (S) of the motor housing (11b 12b, 13b) facing the arm axis (A) and extending at least over a 90 degree angle.

7. Industrial robot according to claim 5 or 6, wherein the first actuator (11), the second actuator (12) and the third actuator (13) each have a motor housing (11b, 12b, 13b) with an output-side flange (27), a rotary input-side flange (28) located axially opposite the output-side flange (27), and a central housing segment (29) between the two flanges (27, 28) which is designed to be tubular with an annular wall thickness that is constant in cross-section.

8. Industrial robot according to any of claims 1 to 7, wherein the second actuator (12) and/or the third actuator (13) has an angular gear (17) at its output-side flanges (16, 27), in particular an angular gear (17) deflecting the torque by a 90 degree angle.

9. Industrial robot according to claim 8, wherein the angular gear (17) or the angular gears (17) has/have an output side with a driving pulley (18) which transfers the torque via a drive belt (19) running on the driving pulley (18), to a driving pulley (20) connected to the first hand element (14) and/or the second hand element (15), in particular via an interconnected gear.

10. Industrial robot according to any of claims 1 to 9, wherein the first actuator (11) has a driving pinion (25) that meshes with an output spur gear (26) to form a spur gearing stage, said output spur gear being connected to the arm housing (9) and/or to a drive-side input shaft of a hollow shaft gearbox (12) connecting the arm housing (9) to the primary hand housing (10) so as to allow rotation.

## Revendications

1. Robot industriel, comportant
un bras de robot (2) qui présente un bras oscillant (5) et un bras en porte-à-faux (6) qui est monté pivotant sur le bras oscillant (5),
- qui présente un boîtier de bras (9) monté pivotant sur le bras oscillant (5),
- qui présente un boîtier de base de main (10) qui est monté pivotant sur le boîtier de bras (9) au moyen d'un premier entraînement (11) qui présente un premier arbre d'entraînement (11a), autour d'un axe de bras (A) qui s'étend dans l'extension longitudinale du bras en porte-à-faux (6), et
- qui présente un premier membre de main (14) réglable autour d'un premier axe de main (HA1) par rapport au boîtier de base de main (10), au moyen d'un deuxième arbre d'entraînement (12) qui présente un deuxième arbre d'entraînement (12a), et un deuxième membre de main (15) réglable autour d'un deuxième axe de main (HA2) par rapport au premier membre de main (14) au moyen d'un troisième entraînement (13) qui comporte un troisième arbre d'entraînement (13a),
**caractérisé en ce que**
tant le premier entraînement (11) que le deuxième entraînement (12) et le troisième entraînement (13) avec leurs arbres d'entraînement (11a, 12a, 13a) respectifs sont agencés en s'étendant au moins sensiblement parallèles et à une distance de l'axe du bras (A) dans le boîtier de base de main (10).

2. Robot industriel selon la revendication 1, dans lequel le boîtier de bras (9) est relié en rotation au boîtier de base de main (10) par l'intermédiaire d'un engrenage à arbre creux (21) qui présente un arbre creux (22) à travers lequel est guidée au moins une conduite d'alimentation (24), en particulier présentant au moins une conduite électrique, pneumatique et/ou hydraulique, qui s'étend au moins sensiblement le long de l'axe de bras (A) dans le boîtier de base de main (10), le premier entraînement (11), le deuxième entraînement (12) et le troisième entraînement (13) étant agencés dans le boîtier de base de main (10) à une distance radiale (R) de l'axe de bras (A) en entourant ladite au moins une conduite d'alimentation (24) depuis l'extérieur.

3. Robot industriel selon la revendication 2, dans lequel dans le boîtier de base de main (10) est agencé un tube de protection (23) qui entoure dans la direction longitudinale ladite au moins une conduite d'alimentation (24), en particulier ladite au moins une conduite électrique, pneumatique et/ou hydraulique, et présente une paroi de gaine, le premier entraînement (11), le deuxième entraînement (12) et le troisième entraînement (13), étant agencés autour de la paroi de gaine du tube de protection.

4. Robot industriel selon l'une quelconque des revendications 1 à 3, dans lequel le premier entraînement (11), le deuxième entraînement (12) et le troisième entraînement (13) avec leurs arbres d'entraînement (11a, 12a, 13a) respectifs, sont agencés dans le boîtier de base de main (10) en étant répartis autour de l'axe de bras (A) avec décalage respectif de 90 degrés d'angle.

5. Robot industriel selon l'une quelconque des revendications 1 à 4, dans lequel le premier entraînement (11), le deuxième entraînement (12) et le troisième entraînement (13) présentent chacun un carter de moteur (11b, 12b, 13b) respectif qui présente une paroi enveloppe de carter (M) en arc de cercle au moins dans un secteur (S) du carter de moteur (11b, 12b, 13b), qui est tourné vers l'axe (A) du bras, en particulier dans un secteur (S) du carter du moteur (11b, 12b, 13b) qui est tourné vers l'axe du bras (A) et s'étend sur au moins 90 degrés d'angle.

6. Robot industriel selon la revendication 5, dans lequel le premier entraînement (11), le deuxième entraînement (12) et le troisième entraînement (13) présentent chacun un carter de moteur (11b, 12b, 13b) qui, au moins dans un secteur (S) du carter de moteur (11b, 12b, 13b) tourné vers l'axe du bras (A), en particulier dans un secteur (S) du carter de moteur (11b, 12b, 13b) tourné vers l'axe du bras (A) et s'étendant au moins sur 90 degrés d'angle, présente une paroi enveloppe de carter (M) d'épaisseur constante.

7. Robot industriel selon la revendication 5 ou 6, dans lequel le premier entraînement (11), le deuxième entraînement (12) et le troisième entraînement (13) présentent chacun un carter de moteur (11b, 12b, 13b) avec une bride côté sortie (27), une bride côté codeur rotatif (28) axialement opposée à la bride côté sortie (27) et un tronçon de carter central (29) agencé entre les deux brides (27, 28), qui est réalisé de forme tubulaire avec une épaisseur de paroi annulaire constante en section transversale.

8. Robot industriel selon l'une quelconque des revendications 1 à 7, dans lequel le deuxième entraînement (12) et/ou le troisième entraînement (13) présentent sur leurs brides côté sortie (16, 27) chacun un engrenage angulaire (17), en particulier un engrenage angulaire (17) qui dévie le couple de 90 degrés d'angle.

9. Robot industriel selon la revendication 8, dans lequel l'engrenage angulaire (17) ou les engrenages angulaires (17) présente/nt chacun côté sortie une poulie motrice (18) qui transmet le couple via une courroie de transmission (19) passant sur la poulie motrice (18) à une poulie de sortie (20) qui est reliée au premier membre de main (14) et/ou au deuxième membre de main (15), en particulier via un engrenage intermédiaire.

10. Robot industriel selon l'une quelconque des revendications 1 à 9, dans lequel le premier entraînement (11) présente un pignon d'entraînement (25) qui s'engrène pour former un étage d'engrenage droit sur un engrenage de sortie (26) qui est relié au boîtier de bras (9), et/ou qui est relié à un arbre d'entrée côté entraînement d'un réducteur à arbre creux (12) reliant en rotation le boîtier de bras (9) au boîtier de base de main (10).
